# EUROPEAN PATENT APPLICATION

(11) **EP 4 661 572 A1**
(43) Date of publication of application: **10.12.2025**
(21) Application number: 24749706.8
(22) Date of filing: 31.01.2024
(51) Int. Cl.: H04W 72/542

(54) **METHOD AND APPARATUS USED IN NODE FOR WIRELESS COMMUNICATION**

(30) Priority: 03.02.2023 CN 202310088969
(71) Applicant: Apogee Networks, LLC, Dallas, TX 75201 (US)
(72) Inventor: JIANG, Qi, Shanghai 201206 (CN); WANG, Ping, Shanghai 201206 (CN); ZHANG, Xiaobo, Shanghai 201206 (CN)
(74) Representative: Gunzelmann, Rainer
(86) International application number: PCT/CN2024/074938
(87) International publication number: WO 2024/160227

(57) **Abstract**

The present application discloses a method and apparatus used in a node for wireless communication. A first node receives first signaling and second signaling, the first signaling being RRC signaling, and being used for configuring at least one power offset value for a first RS resource, and the second signaling being MAC layer signaling or physical layer signaling, and being used for indicating a first power offset value for the first RS resource; a first RS is received in the first RS resource. The first power offset value simultaneously depends on the at least one power offset value and the second signaling. The ratio of the EPRE of the first RS to the EPRE of a broadcast signal is equal to the first power offset value. The broadcast signal comprises a synchronization signal. The present application improves the determination of the reference signal power in a network energy-saving scene, thereby saving the energy, and improving the measurement precision and the transmission reliability.

## Description

### Technical Field

The present application relates to a transmission method and apparatus in a wireless communication system, in particular to a method and an apparatus for supporting reference signal transmission in a network energy-saving scene.

### Background Art

In the future, the application scenes of a wireless communication system will become more and more diversified, and different application scenes impose different performance requirements for the system. In order to meet the different performance requirements of various application scenes, it was resolved on the 3GPP (3rd Generation Partnership Project) RAN (Radio Access Network) #72 plenary to initiate a study on the New Radio technology (NR) (or 5G). At the 3GPP RAN #75 plenary, the WI (Work Item) for the New Radio technology (NR) was passed to begin the standardization work on NR.

Network Energy Saving (NES) is of great significance for environmental sustainability, the reduction of the impact on environment (greenhouse gas emissions), and the saving of operating costs. As 5G (the 5th Generation Partnership Project) becomes more prevalent across industries and geographic regions, very high data rates are required to handle more advanced services and applications (such as XR), resulting in increasingly dense networks, and the usage of more antennas, greater bandwidths, and more frequency bands. In order to keep the impact of 5G on the environment within a controllable range, new solutions need to be studied to improve network energy saving. Therefore, the 3GPP RAN #94 meeting approved a study item (SI) of the "Study on network energy savings", which supports technical enhancements in the aspects of time domains, frequency domains, spatial domains, power domains, etc.

### Summary of the Invention

Reference Signals (RS) play an important role in wireless communication. In an existing system, a network configures user equipment (UE) with an RS resource for receiving a reference signal, and sends a reference signal on the configured RS resource. The UE performs measurement on the configured RS resource and obtains measurement information. The inventors have found that when the network is in an NES state, how to determine a power value of the RS resource is a problem that needs to be solved.

In view of the above problem, the present application discloses a solution. It should be noted that although the original intention of the present application is for a network energy-saving scene, the present application can also be applied to other non-network energy-saving scenes. Furthermore, adopting a unified design scheme for different scenes (including but not limited to network energy-saving scenes and other non-network energy-saving scenes) can also help reduce hardware complexity and costs. In the absence of conflicts, embodiments and features in the embodiments in any node of the present application can be applied to any other nodes. In the absence of conflicts, the embodiments and features in the embodiments of the present application may be arbitrarily combined with each other.

In particular, the explanation of terminologies, nouns, functions, and variables in the present application (if not specified) can refer to the definitions in the TS36 series, TS38 series, and TS37 series of the specification protocol of 3GPP. If necessary, reference can be made to 3GPP standards TS38.211, TS38.212, TS38.213, TS38.214, TS38.215, TS38.321, TS38.331, TS38.305, TS38.304, and TS37.355 for assisting in understanding the present application.

As one embodiment, the interpretation of the terminologies in the present application refers to the definition of TS36 series of the specification protocol of 3GPP.

As one embodiment, the interpretation of the terminologies in the present application refers to the definition of TS38 series of the specification protocol of 3GPP.

As one embodiment, the interpretation of the terminologies in the present application refers to the definition of TS37 series of the specification protocol of 3GPP.

As one embodiment, the interpretation of the terminologies in the present application is based on the definition of the specification protocol of IEEE (Institute of Electrical and Electronics Engineers).

The present application discloses a method used in a first node for wireless communication, comprising:
receiving first signaling and second signaling, wherein the first signaling is RRC signaling, and the first signaling is used for configuring at least one power offset value for a first RS resource; the second signaling is MAC layer signaling or physical layer signaling, and the second signaling is used for indicating a first power offset value for the first RS resource; and
receiving a first RS in the first RS resource,
wherein the first power offset value simultaneously depends on the at least one power offset value and the second signaling; the ratio of EPRE of the first RS to EPRE of a broadcast signal is equal to the first power offset value; and the broadcast signal comprises a synchronization signal.

As one embodiment, the problem to be solved by the present application comprises: how to determine a power offset value of the RS resource.

As one embodiment, the characteristics of the above method comprise: jointly determining the power offset value of the RS resource through the RRC signaling and signaling of a protocol layer below an RRC layer, thereby solving the above problem.

As one embodiment, the benefit of the above method comprises: facilitating network energy saving.

As one embodiment, the benefit of the above method comprises: more dynamically determining the power offset value of the RS resource according to the signaling of the protocol layer below the RRC layer (such as MAC CE or physical layer signaling), which is beneficial to adapting to rapidly changing scenes and environments.

As one embodiment, the benefit of the above method comprises: improving the reliability of measurement in a network energy saving state.

As one embodiment, the benefit of the above method comprises: improving the reliability of transmission in a network energy saving state.

According to one aspect of the present application, the above method is characterized in that the at least one power offset value comprises a plurality of power offset values, and the first power offset value is one of the plurality of power offset values.

According to one aspect of the present application, the above method is characterized in that the at least one power offset value comprises only one power offset value, and the second signaling is used for indicating a difference between the first power offset value and the at least one power offset value.

According to one aspect of the present application, the above method is characterized by comprising:
evaluating radio link quality according to the first RS,
wherein the behavior of evaluating the radio link quality comprises scaling a received power of the first RS by the first power offset value. According to one aspect of the present application, the above method is characterized in that a sender of the first signaling comprises a second node, the second signaling is used for determining that the second node enters a first state, the at least one power offset value corresponds to a first candidate power offset value and a second candidate power offset value, and the second node entering the first state is used for determining the first power offset value from the first candidate power offset value and the second candidate power offset value; and a characteristic of the first state comprises that the second node stops dynamic scheduling-based data transmission.

According to one aspect of the present application, the above method is characterized in that the first RS resource is one of Q1 RS resources, and Q1 is a positive integer greater than 1; the Q1 RS resources are respectively associated with Q1 power offset values; the at least one power offset value corresponds to the Q1 power offset values; and the first power offset value is a power offset value associated with the first RS resource in the Q1 power offset values.

According to one aspect of the present application, the above method is characterized by comprising:
sending a first signal,
wherein the first signal is used for determining the first RS resource; and measurement of L1-RSRP corresponding to the first RS resource is greater than or equal to a first threshold.

According to one aspect of the present application, the above method is characterized in that the first node comprises one piece of user equipment.

According to one aspect of the present application, the above method is characterized in that the first node comprises one relay node.

The present application discloses a method used in a second node for wireless communication, comprising:
sending first signaling and second signaling, wherein the first signaling is RRC signaling, and the first signaling is used for configuring at least one power offset value for a first RS resource; the second signaling is MAC layer signaling or physical layer signaling, and the second signaling is used for indicating a first power offset value for the first RS resource; and
sending a first RS in the first RS resource,
wherein the first power offset value simultaneously depends on the at least one power offset value and the second signaling; the ratio of EPRE of the first RS to EPRE of a broadcast signal is equal to the first power offset value; and the broadcast signal comprises a synchronization signal.

According to one aspect of the present application, the above method is characterized in that the at least one power offset value comprises a plurality of power offset values, and the first power offset value is one of the plurality of power offset values.

According to one aspect of the present application, the above method is characterized in that the at least one power offset value comprises only one power offset value, and the second signaling is used for indicating a difference between the first power offset value and the at least one power offset value.

According to one aspect of the present application, the above method comprises:
a recipient of the first RS comprises the first node, and the first node evaluates radio link quality according to the first RS,
wherein the behavior of evaluating the radio link quality comprises scaling a received power of the first RS by the first power offset value.

According to one aspect of the present application, the above method is characterized in that the second signaling is used for determining that the second node enters a first state, the at least one power offset value corresponds to a first candidate power offset value and a second candidate power offset value, and the second node entering the first state is used for determining the first power offset value from the first candidate power offset value and the second candidate power offset value; and a characteristic of the first state comprises that the second node stops dynamic scheduling-based data transmission.

According to one aspect of the present application, the above method is characterized in that the first RS resource is one of Q1 RS resources, and Q1 is a positive integer greater than 1; the Q1 RS resources are respectively associated with Q1 power offset values; the at least one power offset value corresponds to the Q1 power offset values; and the first power offset value is a power offset value associated with the first RS resource in the Q1 power offset values.

According to one aspect of the present application, the above method is characterized by comprising:
receiving a first signal,
wherein the first signal is used for determining the first RS resource; and measurement of L1-RSRP corresponding to the first RS resource is greater than or equal to a first threshold.

According to one aspect of the present application, the above method is characterized in that the second node is a base station.

According to one aspect of the present application, the above method is characterized in that the second node is user equipment.

According to one aspect of the present application, the above method is characterized in that the second node is a relay node.

The present application discloses a device used in a first node for wireless communication, comprising:
a first receiver, receiving first signaling and second signaling, wherein the first signaling is RRC signaling, and the first signaling is used for configuring at least one power offset value for a first RS resource; the second signaling is MAC layer signaling or physical layer signaling, and the second signaling is used for indicating a first power offset value for the first RS resource; and
a first transceiver, receiving a first RS in the first RS resource,
wherein the first power offset value simultaneously depends on the at least one power offset value and the second signaling; the ratio of EPRE of the first RS to EPRE of a broadcast signal is equal to the first power offset value; and the broadcast signal comprises a synchronization signal.

The present application discloses a device used in a second node for wireless communication, comprising:
a first transmitter, sending first signaling and second signaling, wherein the first signaling is RRC signaling, and the first signaling is used for configuring at least one power offset value for a first RS resource; the second signaling is MAC layer signaling or physical layer signaling, and the second signaling is used for indicating a first power offset value for the first RS resource; and
a second transceiver, sending a first RS in the first RS resource;
wherein the first power offset value simultaneously depends on the at least one power offset value and the second signaling; the ratio of EPRE of the first RS to EPRE of a broadcast signal is equal to the first power offset value; and the broadcast signal comprises a synchronization signal.

As one embodiment, compared with the traditional solution, the present application has the following advantages:
facilitating network energy saving;
improving the reliability of transmission in a network energy saving state;
improving the reliability of measurement in a network energy saving state; and
more dynamically determining the power offset value of the RS resource according to the signaling of the protocol layer below the RRC layer (such as MAC CE or physical layer signaling), which is beneficial to adapting to rapidly changing scenes and environments.

### Brief Description of the Drawings

Other features, purposes and advantages of the present application will become more apparent from reading the detailed description of the non-limiting embodiments made with reference to the following drawings:
FIG. 1 shows a flowchart of transmission of first signaling, second signaling, and a first RS according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows a flowchart of transmission between a first node and a second node according to one embodiment of the present application;
FIG. 6 shows a schematic diagram of at least one power offset value comprising a plurality of power offset values according to one embodiment of the present application;
FIG. 7 shows a schematic diagram of at least one power offset value comprising a plurality of power offset values according to another embodiment of the present application;
FIG. 8 shows a schematic diagram of at least one power offset value comprising only one power offset value according to one embodiment of the present application;
FIG. 9 shows a schematic diagram of at least one power offset value corresponding to a first candidate power offset value and a second candidate power offset value according to one embodiment of the present application;
FIG. 10 shows a schematic diagram of a relationship between a first RS resource and a first power offset value according to one embodiment of the present application;
FIG. 11 shows a schematic diagram of a first node evaluating radio link quality according to a first RS according to one embodiment of the present application;
FIG. 12 shows a schematic diagram of a first signal being used for determining a first RS resource according to one embodiment of the present application;
FIG. 13 shows a structural block diagram of a processing unit used in a first node according to one embodiment of the present application; and
FIG. 14 shows a structural block diagram of a processing unit used in a second node according to one embodiment of the present application.

### Detailed Description of Embodiments

The technical solution of the present application will be further described in detail below in conjunction with the accompanying drawings. It should be noted that, in the absence of conflicts, embodiments and features in the embodiments of the present application may be arbitrarily combined with each other.

### Embodiment 1

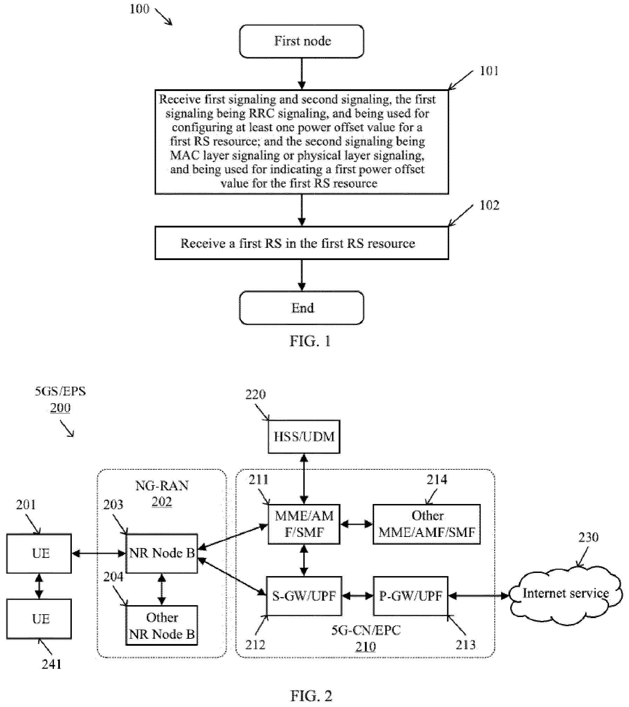

Embodiment 1 illustrates a flowchart of transmission of first signaling, second signaling, and a first RS according to one embodiment of the present application, as shown in FIG. 1. In FIG. 1, each block represents one step. In particular, the order of steps in the blocks does not represent a specific time sequence relation between the steps.

A first node receives first signaling and second signaling in step 101, wherein the first signaling is RRC signaling, and the first signaling is used for configuring at least one power offset value for a first RS resource; the second signaling is MAC layer signaling or physical layer signaling, and the second signaling is used for indicating a first power offset value for the first RS resource; and a first RS is received in the first RS resource in step 102.

In Embodiment1, the first power offset value simultaneously depends on the at least one power offset value and the second signaling; the ratio of EPRE of the first RS to EPRE of a broadcast signal is equal to the first power offset value; and the broadcast signal comprises a synchronization signal.

As one embodiment, the RRC refers to Radio Resource Control.

As one embodiment, the RS resource refers to Reference Signal resource.

As one embodiment, the MAC layer refers to Medium Access Control layer.

As one embodiment, the EPRE refers to Energy Per Resource Element.

As one embodiment, the first node supports network energy saving (NES).

As one embodiment, the first signaling comprises information in all or parts of fields in one RRC IE (Information Element).

As one embodiment, the first signaling comprises part or all of the fields in *SIB17* IE.

As one embodiment, the first signaling comprises part or all of the fields in *TRS-ResourceSet* IE.

As one embodiment, the first signaling comprises part or all of the fields in *NZP-CSI-RS-Resource* IE.

As one embodiment, the first signaling is one RRC IE.

As one embodiment, the first signaling is the *SIB17* IE.

As one embodiment, the first signaling is the *TRS-ResourceSet* IE.

As one embodiment, the first signaling is the *NZP-CSI-RS-Resource* IE.

As one embodiment, the first signaling comprises *a powerControlOffsetSS* field.

As one embodiment, the first signaling corresponds to the RRC signaling in TS 38.331.

As one embodiment, the name of the RRC signaling to which the first signaling corresponds comprises Power.

As one embodiment, the name of the RRC signaling to which the first signaling corresponds comprises Control.

As one embodiment, the name of the RRC signaling to which the first signaling corresponds comprises Offset.

As one embodiment, the name of the RRC signaling to which the first signaling corresponds comprises SS.

As one embodiment, the name of the RRC signaling to which the first signaling corresponds comprises Energy.

As one embodiment, the name of the RRC signaling to which the first signaling corresponds comprises Saving.

As one embodiment, the name of the RRC signaling to which the first signaling corresponds comprises NES.

As one embodiment, the first signaling is used for configuring one power offset value for the first RS resource.

As one sub-embodiment of this embodiment, the first signaling is used for indicating the power offset value.

As one sub-embodiment of this embodiment, the first signaling is used for indicating a given difference, and the sum of the given difference and a given power offset value is equal to the first power offset value.

As one dependent embodiment of this sub-embodiment, the first signaling is used for configuring the given difference for the first RS resource.

As one dependent embodiment of this sub-embodiment, the first signaling is used for configuring the given power offset value for the first RS resource.

As one embodiment, the unit of the power offset value in the present application is dB (decibel).

As one embodiment, the power offset value in the present application is a linear value.

As one embodiment, the unit of the difference in the present application is dB (decibel).

As one embodiment, the difference in the present application is a real number.

As one embodiment, the first signaling is used for configuring K1 power offset values for the first RS resource, and K1 is a positive integer greater than 1.

As one sub-embodiment of this embodiment, the first signaling is used for indicating the K1 power offset values.

As one sub-embodiment of this embodiment, the second signaling is used for indicating a first power offset value, and the first power offset value is one of the K1 power offset values.

As one sub-embodiment of this embodiment, K1 is equal to 2.

As one dependent embodiment of this sub-embodiment, the first signaling is used for indicating a given power offset value and a given difference.

As one dependent embodiment of this sub-embodiment, the second signaling is used for indicating whether the given difference is adopted, or the second signaling is used for indicating whether the given difference is activated, and the sum of the given power offset value and the given difference is equal to the first power offset value.

As one sub-embodiment of this embodiment, K1 is a positive integer greater than 2.

As one dependent embodiment of this sub-embodiment, the first signaling is used for indicating a given power offset value and a plurality of candidate differences.

As one dependent embodiment of this sub-embodiment, the second signaling is used for indicating a target difference, wherein the target difference is one of the plurality of candidate differences, and the sum of the given power offset value and the target difference is equal to the first power offset value.

As one embodiment, the first RS resource occupies at least one RE (Resource Element).

Typically, one RE occupies one symbol in a time domain and one subcarrier in a frequency domain.

As one embodiment, the symbol is an OFDM (Orthogonal Frequency Division Multiplexing) symbol.

As one embodiment, the symbol is a DFT-S-OFDM (Discrete Fourier Transform Spread OFDM) symbol.

As one embodiment, the symbol is obtained by an output of transform precoding undergoing the generation of the OFDM symbol.

As one embodiment, the first RS resource comprises at least one symbol in one slot in the time domain.

As one embodiment, the first RS resource comprises a plurality of symbols in one slot in the time domain.

As one embodiment, the first RS resource comprises a plurality of slots in the time domain.

As one embodiment, the first RS resource comprises a plurality of sub-frames in the time domain.

As one embodiment, the first RS resource comprises at least one sub-band in the frequency domain.

As one embodiment, the first RS resource comprises at least one RB (Resource Block) in the frequency domain.

As one embodiment, the RB in the present application comprises a PRB (Physical Resource Block).

As one embodiment, the RB in the present application refers to a PRB.

As one embodiment, the RB in the present application comprises 12 consecutive subcarriers in the frequency domain.

As one embodiment, one RS resource is identified by one RS resource index.

As one embodiment, the one RS resource index comprises a configuration index of the one RS resource.

As one embodiment, the one RS resource index is a configuration index of the one RS resource.

As one embodiment, an index of one periodic CSI-RS resource comprises a configuration index of the one periodic CSI-RS resource.

As one embodiment, an index of one periodic CSI-RS resource is a configuration index of the one periodic CSI-RS resource.

As one embodiment, an index of one CSI-RS resource is NZP-CSI-RS-ResourceId.

As one embodiment, an index of one CSI-RS resource is csi-RS-Index.

As one embodiment, the first RS resource comprises a group of downlink PRBs.

As one embodiment, the first RS resource is a periodic RS resource.

As one embodiment, the first RS resource comprises a CSI-RS (Channel State Information-Reference Signal) resource.

As one embodiment, the first RS resource is one CSI-RS resource.

As one embodiment, the first RS resource comprises an NZP CSI-RS (Non-Zero-Power CSI-RS) resource.

As one embodiment, the first RS resource is one NZP CSI-RS resource.

As one embodiment, the first RS resource comprises a PTRS (Phase Tracking Reference Signal) resource.

As one embodiment, the first RS resource is a PTRS resource.

As one embodiment, the first RS resource comprises a DMRS (DeModulation Reference Signal) resource.

As one embodiment, the first RS resource is a DMRS resource.

As one embodiment, the first RS resource comprises a TRS (Tracking Reference Signal) resource.

As one embodiment, the first RS resource is a TRS resource.

As one embodiment, the first RS resource corresponds to one SSB-Index.

As one embodiment, the first RS resource corresponds to one NZP-CSI-RS-ResourceId.

As one embodiment, the first RS resource corresponds to one Identity.

As one embodiment, the first RS resource corresponds to one CSI-IM-ResourceId.

As one embodiment, the first RS resource corresponds to one CSI-SSB-ResourceId.

As one embodiment, the second signaling is MAC layer signaling.

As one embodiment, the second signaling is an MAC CE (Control Element).

As one embodiment, the second signaling is an MAC PDU (Protocol Data Unit).

As one embodiment, the second signaling is an MAC subheader.

As one embodiment, the second signaling is a physical layer signaling.

As one embodiment, the second signaling comprises information in one or more fields in one piece of DCI.

As one embodiment, the second signaling is DCI (Downlink Control Information).

As one embodiment, a format of the second signaling is one of format 0_0, format 0_1, format 0_2, format 1_0, or format 2_2.

As one embodiment, a format of the second signaling is one DCI format other than format 0_0, format 0_1, format 0_2, format 1_0, and format 2_2.

As one embodiment, a CRC (Cyclic redundancy check) of the second signaling is scrambled by a C (Cell)-RNTI (Radio Network Temporary Identifier).

As one embodiment, the CRC of the second signaling is scrambled by an MCS (Modulation and coding scheme)-C-RNTI.

As one embodiment, the CRC of the second signaling is scrambled by a T (Temporary) C-RNTI.

As one embodiment, the CRC of the second signaling is scrambled by a TPC (transmit power Control)-PUCCH (Physical Uplink Control CHannel)-RNTI.

As one embodiment, the CRC of the second signaling is scrambled by a TPC-PUSCH (Physical Uplink Shared CHannel)-RNTI.

As one embodiment, the CRC of the second signaling is scrambled by an RNTI other than a C-RNTI.

As one embodiment, the CRC of the second signaling is scrambled by a cell-dedicated RNTI.

As one embodiment, the CRC of the second signaling is scrambled by an RNTI other than a UE-dedicated RNTI.

As one embodiment, the second signaling is SCI (Sidelink Control Information).

As one embodiment, the second signaling is SFI (Slot Format Indication).

As one embodiment, the first RS comprises a CSI-RS.

As one embodiment, the first RS is one CSI-RS.

As one embodiment, the first RS comprises a PTRS.

As one embodiment, the first RS is a PTRS.

As one embodiment, the first RS comprises a DMRS.

As one embodiment, the first RS is a DMRS.

As one embodiment, the first RS comprises a TRS.

As one embodiment, the first RS is a TRS.

As one embodiment, the meaning of receiving the first RS on the first RS resource comprises: receiving the first RS according to power control parameters configured for the first RS resource.

As one embodiment, the power control parameters configured for the first RS resource comprise the first power offset value.

As one embodiment, the meaning of receiving the first RS on the first RS resource comprises: receiving the first RS according to QCL (Quasi co-location) parameters configured for the first RS resource.

As one embodiment, the types of the QCL parameters comprise TypeA, TypeB, TypeC, and TypeD.

As one embodiment, the quasi co-location parameters of TypeA comprise Doppler shift, Doppler spread, average delay, and delay spread; the quasi co-location parameters of TypeB comprise Doppler shift and Doppler spread. the quasi co-location parameters of TypeC comprise Doppler shift and average delay; and the quasi co-location parameters of TypeD comprise a spatial Rx parameter.

As one embodiment, for the specific definitions of TypeA, TypeB, TypeC, and TypeD, see Chapter 5.1.5 of 3GPP TS38.214.

As one embodiment, the meaning of receiving the first RS on the first RS resource comprises: receiving the first RS in REs (Resource Elements) corresponding to the first RS resource.

As one embodiment, the unit of the first power offset value is dB.

As one embodiment, the first power offset value is a linear value.

As one embodiment, the first power offset value is used for determining transmit power of the first RS resource.

As one embodiment, the transmit power of the first RS resource is defined as a linear average of a power contribution of the RE carrying the configured RS within an operating system bandwidth.

As one embodiment, the broadcast signal comprises a PSS (Primary Synchronization Signal).

As one embodiment, the broadcast signal comprises an SSS (Secondary Synchronization Signal).

As one embodiment, the broadcast signal comprises a PBCH (Physical Broadcast Channel).

As one embodiment, the broadcast signal comprises an SS (Synchronization Signal).

As one embodiment, the broadcast signal comprises an SSB (Synchronization Signal Block).

As one embodiment, the broadcast signal comprises an SSB (SS/PBCH, Synchronization Signal/Physical Broadcast Channel).

As one embodiment, the broadcast signal is a PSS.

As one embodiment, the broadcast signal is an SSS.

As one embodiment, the broadcast signal is a PBCH.

As one embodiment, the broadcast signal is an SS.

As one embodiment, the broadcast signal is an SSB (Synchronization Signal Block).

As one embodiment, the broadcast signal is an SSB (SS/PBCH, Synchronization Signal/Physical Broadcast Channel).

Typically, the reception occasions of the PBCH, PSS, and SSS are in consecutive symbols and form an SS/PBCH block.

As one embodiment, the SSS, PBCH DMRS, and PBCH data in one SS/PBCH block have the same EPRE, which is indicated by *ss-PBCH-BlockPower.*

As one embodiment, the SSS, PBCH DMRS, and PBCH data in one SS/PBCH block have the same EPRE, which is indicated by *ss-PBCH-BlockPower-r17.*

As one embodiment, the ratio of EPRE of PSS to EPRE of SSS in one SS/PBCH block is equal to 0 dB.

As one embodiment, the ratio of EPRE of PSS to EPRE of SSS in one SS/PBCH block is equal to 3 dB.

As one embodiment, the first RS is quasi co-located (QCLed) with the broadcast signal.

As one embodiment, the first power offset value and the transmit power of the broadcast signal are jointly used for determining transmit power of the first RS resource.

As one embodiment, the transmit power of the broadcast signal is indicated by *ss-PBCH-BlockPower.*

As one embodiment, the transmit power of the broadcast signal is indicated by *ss-PBCH-BlockPower-r17.*

As one non-limiting embodiment, the traditional *powerControlOffsetSS* IE is used for determining power offset between the RE occupied by CSI-RS and the RE occupied by SSS RE. Generally, CSI-RS has better beamforming gains compared with SSS, while the determination of a transmit power value of SSS is more based on coverage. Therefore, the transmit power value of CSI-RS is smaller than that of SSS; that is, although the value determined by the *powerControlOffsetSS* IE is based on the implementation of the base station, it is more likely to be a negative value.

As one non-limiting embodiment, the first power offset value proposed in the present application primarily serves base station energy-saving scenes, that is, the base station will turn off some antenna elements to save power, and thus the number of reserved antenna elements used for sending the first RS in the first RS resource will be less than that in a conventional case. From the perspective of either maintaining coverage or having a smaller beamforming gain, the power value of the first RS needs to be increased instead. Therefore, compared with the value of the existing *powerControlOffsetSS* IE, the first power offset value will be a larger value and more likely a positive value.

As one embodiment, the first power offset value is associated with a first time length.

As one sub-embodiment of this embodiment, the first node provides an indication of radio link quality from the physical layer to a higher layer with the first time length as a period.

As one sub-embodiment of this embodiment, the first time length corresponds to *beamFailureDetectionTimer.*

As one sub-embodiment of this embodiment, the first time length is related to a configuration period of the first RS resource.

As one sub-embodiment of this embodiment, the first time length is linearly related to the configuration period of the first RS resource.

As one sub-embodiment of this embodiment, the first time length is related to a DTX (Discontinuous Transmission) period of the second node.

As one sub-embodiment of this embodiment, the first time length is equal to the DTX period of the second node.

As one sub-embodiment of this embodiment, the first power offset value increases as the first time length increases.

As one sub-embodiment of this embodiment, the first power offset value decreases as the first time length decreases.

### Embodiment 2

Embodiment 2 illustrates a schematic diagram of a network architecture according to one embodiment of the present application, as shown in FIG. 2.

FIG. 2 illustrates a network architecture of LTE (Long-Term Evolution), LTE-A (Long-Term Evolution Advanced) and future 5G systems. The network architecture of the LTE, LTE-A and future 5G systems is called an EPS (Evolved Packet System). The 5G NR or LTE network architecture may be referred to as a 5GS (5G system)/EPS 200 or some other suitable terminologies. The 5GS/EPS 200 may comprise one or more pieces of UE 201, one piece of UE 241 performing sidelink communication with the UE 201, an NG-RAN (Next-Generation Radio Access Network) 202, a 5G-CN (5G Core Network)/EPC (Evolved Packet Core) 210, an HSS (Home Subscriber Server)/UDM (Unified Data Management) 220, and an Internet service 230. The 5GS/EPS 200 may be interconnected with other access networks, but these entities/interfaces are not shown for simplicity. As shown in FIG. 2, the 5GS/EPS 200 provides packet switching services, but those skilled in the art will readily appreciate that various concepts presented throughout the present application can be extended to networks that provide circuit switching services. The NG-RAN 202 comprises an NR Node B (gNB) 203 and other gNB 204. The gNB 203 provides user and control plane protocol termination towards the UE 201. The gNB 203 may be connected to the other gNB 204 via an Xn interface (e.g., backhaul). The gNB 203 may also be referred to as a base station, a base transceiving station, a radio base station, a radio transceiving device, a transceiving device function, a basic service set (BSS), an extended service set (ESS), a TRP (Transmitter Receiver Point) or some other suitable terminologies. The gNB 203 provides an access point to the 5G-CN/EPC 210 for the UE 201. Examples of the UE 201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrow band Internet of Things device, a machine type communication device, a land vehicle, an automobile, a wearable device, or any other similarly functional apparatuses. Those skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB 203 is connected to the 5G-CN/EPC 210 via an S1/NG interface. The 5G-CN/EPC 210 comprises an MME (Mobility Management Entity)/AMF (Authentication Management Field)/SMF (Session Management Function) 211, other MME/AMF/SMFs 214, an S-GW (Service Gateway)/UPF (User Plane Function) 212, and a P-GW (Packet Data Network Gateway)/UPF 213. The MME/AMF/SMF 211 is a control node that processes signaling between the UE 201 and the 5G-CN/EPC 210. Generally, the MME/AMF/SMF 211 provides bearer and connection management. All user IP (Internet Protocol) packets are transmitted through the S-GW/UPF 212, and the S-GW/UPF 212 is itself connected to the P-GW/UPF 213. The P-GW provides UE IP address allocation and other functions. The P-GW/UPF 213 is connected to the Internet service 230. The Internet service 230 comprises operator-corresponding Internet protocol services, which may specifically comprise Internet, Intranet, IMS (IP Multimedia Subsystem) and packet switching services.

As one embodiment, the first node in the present application comprises the UE 201.

As one embodiment, the second node in the present application comprises the gNB 203.

As one embodiment, a radio link between the UE 201 and the gNB 203 comprises a cellular network link.

As one embodiment, the UE 201 supports Energy Saving on the terminal side.

As one embodiment, the UE 201 supports Energy Saving on the base station side.

As one embodiment, the UE 201 supports reception of DRX (Discontinuous Reception).

As one embodiment, the gNB 203 is a Macro Cell base station.

As one embodiment, the gNB 203 is a Micro Cell base station.

As one embodiment, the gNB 203 is a Pico Cell base station.

As one embodiment, the gNB 203 is a Femtocell.

As one embodiment, the gNB 203 is a base station device supporting a large-latency difference.

As one embodiment, the gNB 203 is one flying platform device.

As one embodiment, the gNB 203 is a satellite device.

As one embodiment, the gNB 203 supports Energy Saving on the base station side.

As one embodiment, the gNB 203 supports the sending of a DTX.

As one embodiment, the gNB 203 is a test device (such as a transceiving apparatus that simulates some functions of a base station, and a signaling tester).

As one embodiment, a radio link from the UE 201 to the gNB 203 is an uplink, the uplink being used for executing uplink transmission.

As one embodiment, the radio link from the gNB 203 to the UE 201 is a downlink, the downlink being used for executing downlink transmission.

As one embodiment, the UE 201 and the gNB 203 are connected via a Uu air interface.

As one embodiment, a sender of the first signaling comprises the gNB 203.

As one embodiment, a recipient of the first signaling comprises the UE 201.

As one embodiment, a sender of the second signaling comprises the gNB 203.

As one embodiment, a recipient of the second signaling comprises the UE 201.

As one embodiment, a sender of the first RS comprises the gNB 203.

As one embodiment, a recipient of the first RS comprises the UE 201.

As one embodiment, the gNB 203 supports NES.

### Embodiment 3

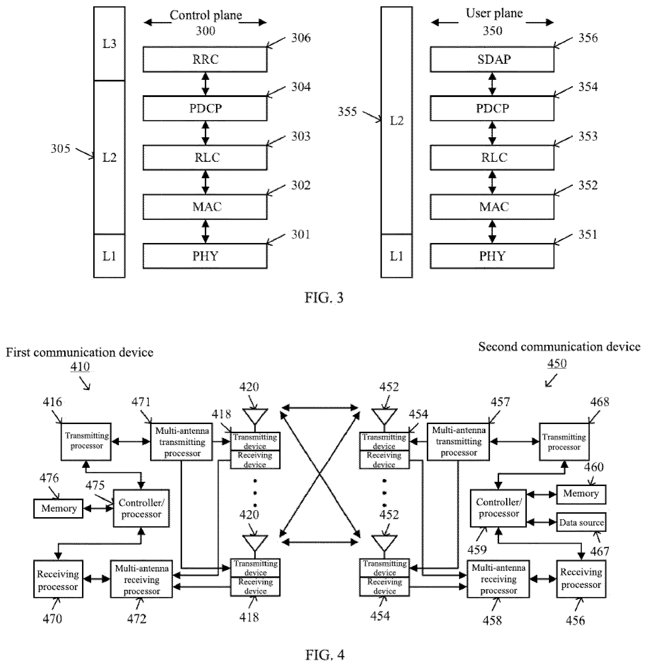

Embodiment 3 illustrates a schematic diagram of an embodiment of a radio protocol architecture for a user plane and a control plane according to one embodiment of the present application, as shown in FIG. 3.

FIG. 3 is a schematic diagram illustrating an embodiment of a radio protocol architecture for a user plane 350 and a control plane 300. FIG. 3 shows a radio protocol architecture for the control plane 300 between a first communication node device (UE or an RSU (Road Side Unit) in V2X (Vehicle to Everything), a vehicle-mounted device or a vehicle-mounted communication module) and a second node device (a gNB, UE or an RSU in V2X, a vehicle-mounted device or a vehicle-mounted communication module), or between two pieces of UE using three layers: Layer 1 (L1), Layer 2 (L2) and Layer 3 (L3). The L1 is the lowest layer and implements various physical layer (PHY) signal processing functions. The L1 will be referred to as PHY 301 herein. The L2 305 is above the PHY 301 and is responsible for links between a first node device and a second node device or between two pieces of UE through the PHY 301. The L2 305 comprises an MAC sublayer 302, an RLC (Radio Link Control) sublayer 303, and a PDCP (Packet Data Convergence Protocol) sublayer 304, and these sublayers terminate at a second node device. The PDCP sublayer 304 provides multiplexing between different radio bearers and logical channels. The PDCP sublayer 304 also provides security by encrypting data packets, and provides handover support of the first communication node device between the second communication node devices. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operations. An RRC sublayer 306 in the L3 in the control plane 300 is responsible for obtaining radio resources (i.e., radio bearers) and configuring lower layers using RRC signaling between the second communication node device and the first communication node device. The radio protocol architecture for the user plane 350 comprises Layer 1 (L1) and Layer 2 (L2). The radio protocol architecture for the first communication node device and the second communication node device in the user plane 350 is substantially the same as that for the corresponding layers and sublayers in the control plane 300 as for a physical layer 351, a PDCP sublayer 354 in L2 355, an RLC sublayer 353 in L2 355, and a MAC sublayer 352 in L2 355, but the PDCP sublayer 354 also provides header compression for upper layer data packets to reduce the radio transmission overhead. The L2 355 in the user plane 350 further comprises an SDAP (Service Data Adaptation Protocol) sublayer 356, and the SDAP sublayer 356 is responsible for mapping between a QoS (Quality of Service) stream and a DRB (Data Radio Bearer) to support the diversity of services. Although not shown, the first communication node device may have several upper layers above the L2 355, comprising a network layer (e.g., IP layer) terminated at the P-GW on the network side and an application layer terminated at the other end (e.g., remote UE, servers, etc.) of the connection.

As one embodiment, the radio protocol architecture in FIG. 3 is applicable to the first node in the present application.

As one embodiment, the radio protocol architecture in FIG. 3 is applicable to the second node in the present application.

As one embodiment, the first signaling is generated in the RRC sublayer 306 or the MAC sublayer 302.

As one embodiment, the second signaling is generated at the PHY 301 or the PHY 351.

As one embodiment, the second signaling is generated at the MAC sublayer 302.

As one embodiment, the first signal is generated at the PHY 301 or the PHY 351.

As one embodiment, the first signal is generated at the MAC sublayer 302.

As one embodiment, the higher layer in the present application refers to a layer above a physical layer.

As one embodiment, a protocol layer below the RRC layer in the present application comprises an MAC layer.

As one embodiment, a protocol layer below the RRC layer in the present application comprises an PHY layer.

### Embodiment 4

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In the transmission from the first communication device 410 to the second communication device 450, at the first communication device 410, upper-layer data packets from a core network are provided to the controller/processor 475. The controller/processor 475 implements the functionality of the L2. In a DL, the controller/processor 475 provides header compression, encryption, packet segmentation and reordering, multiplexing between logical and transport channels, and radio resource allocation to the second communication device 450 based on various priority metrics. The controller/processor 475 is also responsible for HARQ operations, retransmission of lost packets, and signaling to the second communication device 450. The transmitting processor 416 and the multi-antenna transmitting processor 471 implement various signal processing functions for the L1 (i.e., a physical layer). The transmitting processor 416 implements coding and interlacing to facilitate forward error correction (FEC) at the second communication device 450, as well as mapping of signal clusters based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more parallel streams. The transmitting processor 416 then maps each parallel stream to a subcarrier, multiplexes a modulated symbol with a reference signal (e.g., pilot) in a time domain and/or frequency domain, and then uses Inverse Fast Fourier Transform (IFFT) to generate a physical channel carrying a time-domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the first communication device 410 to the second communication device 450, at the second communication device 450, each receiving device 454 receives a signal through a corresponding antenna 452 thereof. Each receiving device 454 recovers information modulated onto a radio frequency carrier, and converts the radio frequency stream into a baseband multi-carrier symbol stream, and provides the baseband multi-carrier symbol stream to the receiving processor 456. The receiving processor 456 and the multi-antenna receiving processor 458 implement various signal processing functions of the L1. The multi-antenna receiving processor 458 performs a receiving analog precoding/beamforming operation on the baseband multi-carrier symbol stream from the receiving device 454. The receiving processor 456 uses Fast Fourier Transform (FFT) to convert the baseband multi-carrier symbol stream after the receiving analog precoding/beamforming operation from a time domain to a frequency domain. In the frequency domain, the physical layer data signal and the reference signal are demultiplexed by the receiving processor 456, wherein the reference signal will be used for channel estimation, and the data signal is recovered after multi-antenna detection in the multi-antenna receiving processor 458 to any parallel stream destined for the second communication device 450. Symbols on each parallel stream are demodulated and recovered in the receiving processor 456, and soft decisions are generated. The receiving processor 456 then decodes and deinterleaves the soft decisions to recover upper-layer data and control signals transmitted by the first communication device 410 on a physical channel. The upper-layer data and the control signals are then provided to the controller/processor 459. The controller/processor 459 implements functions of the L2. The controller/processor 459 may be associated with the memory 460 which stores program codes and data. The memory 460 may be referred to as a computer-readable medium. In a DL, the controller/processor 459 provides demultiplexing between transport and logical channels, packet reassembly, decryption, header decompression, and control signal processing to recover upper layer data packets from the core network. The upper-layer data packets are then provided to all protocol layers above the L2. Various control signals may also be provided to the L3 for L3 processing. The controller/processor 459 is also responsible for error detection using an Acknowledgement (ACK) and/or Negative Acknowledgement (NACK) protocol to support the HARQ operations.

In the transmission from the second communication device 450 to the first communication device 410, at the second communication device 450, the data source 467 is used for providing upper-layer data packets to the controller/processor 459. The data source 467 represents all protocol layers above the L2. Similar to the transmission function at the first communication device 410 described in the DL, the controller/processor 459 implements header compression, encryption, packet segmentation and reordering, and multiplexing between logical and transport channels based on radio resource allocation of the first communication device 410, and implements the functions of the L2 layer for the user plane and the control plane. The controller/processor 459 is also responsible for HARQ operations, retransmission of lost packets, and signaling to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates a generated parallel stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the second communication device 450 to the first communication device 410, the functions at the first communication device 410 are similar to the receiving functions at the second communication device 450 in the transmission from the first communication device 410 to the second communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1. The controller/processor 475 implements functions of the L2. The controller/processor 475 may be associated with the memory 476 which stores program codes and data. The memory 476 may be referred to as a computer-readable medium. The controller/processor 475 provides demultiplexing between transport and logical channels, packet reassembly, decryption, header decompression and control signal processing to recover upper-layer data packets from the second communication device 450. The upper-layer data packets from the controller/processor 475 may be provided to the core network. The controller/processor 475 is also responsible for performing error detection by using an ACK and/or NACK protocol to support the HARQ operations.

As one embodiment, the second communication device 450 comprises: at least one processor and at least one memory, the at least one memory comprising computer program codes; the at least one memory and the computer program code are configured to be used together with the at least one processor. The second communication device 450 apparatus at least receives first signaling and second signaling, wherein the first signaling is RRC signaling, and the first signaling is used for configuring at least one power offset value for a first RS resource; the second signaling is MAC layer signaling or physical layer signaling, and the second signaling is used for indicating a first power offset value for the first RS resource; and receiving a first RS in the first RS resource, wherein the first power offset value simultaneously depends on the at least one power offset value and the second signaling; the ratio of EPRE of the first RS to EPRE of a broadcast signal is equal to the first power offset value; and the broadcast signal comprises a synchronization signal.

As one embodiment, the second communication device 450 comprises: a memory storing a computer-readable instruction program, wherein the computer-readable instruction program generates actions when executed by at least one processor, and the actions comprise: receiving first signaling and second signaling; and receiving a first RS in the first RS resource.

As one embodiment, the first communication device 410 comprises: at least one processor and at least one memory, the at least one memory comprising computer program codes; and the at least one memory and the computer program code are configured to be used together with the at least one processor. The first communication device 410 apparatus at least sends first signaling and second signaling, wherein the first signaling is RRC signaling, and the first signaling is used for configuring at least one power offset value for a first RS resource; the second signaling is MAC layer signaling or physical layer signaling, and the second signaling is used for indicating a first power offset value for the first RS resource; and sending a first RS in the first RS resource, wherein the first power offset value simultaneously depends on the at least one power offset value and the second signaling; the ratio of EPRE of the first RS to EPRE of a broadcast signal is equal to the first power offset value; and the broadcast signal comprises a synchronization signal.

As one embodiment, the first communication device 410 comprises: a memory storing a computer-readable instruction program, wherein the computer-readable instruction program generates actions when executed by at least one processor, and the actions comprise: sending first signaling and second signaling; and sending a first RS in the first RS resource.

As one embodiment, a first node in the present application comprises the second communication device 450.

As one embodiment, a second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first signaling and the second signaling; and at least one of {the antenna 420, the transmitting device 418, the transmitting processor 416, the multi-antenna transmitting processor 471, the controller /processor 475, and the memory 476} is used for sending the first signaling and the second signaling.

As one embodiment, at least one of {the antenna 452, the receiving device 454, the receiving processor 456, the multi-antenna receiving processor 458, the controller/processor 459, the memory 460, and the data source 467} is used for receiving the first RS in the first RS resource; and at least one of {the antenna 420, the transmitting device 418, the transmitting processor 416, the multi-antenna transmitting processor 471, the controller/processor 475, and the memory 476} is used for sending the first RS in the first RS resource.

As one embodiment, at least the first four of the antenna 452, the transmitting device 454, the multi-antenna transmitting processor 457, the transmitting processor 468, and the controller/processor 459 is used for sending a first signal; and at least the first four of the antenna 420, the receiving device 418, the multi-antenna receiving processor 472, the receiving processor 470, and the controller/processor 475 is used for receiving a first signal.

### Embodiment 5

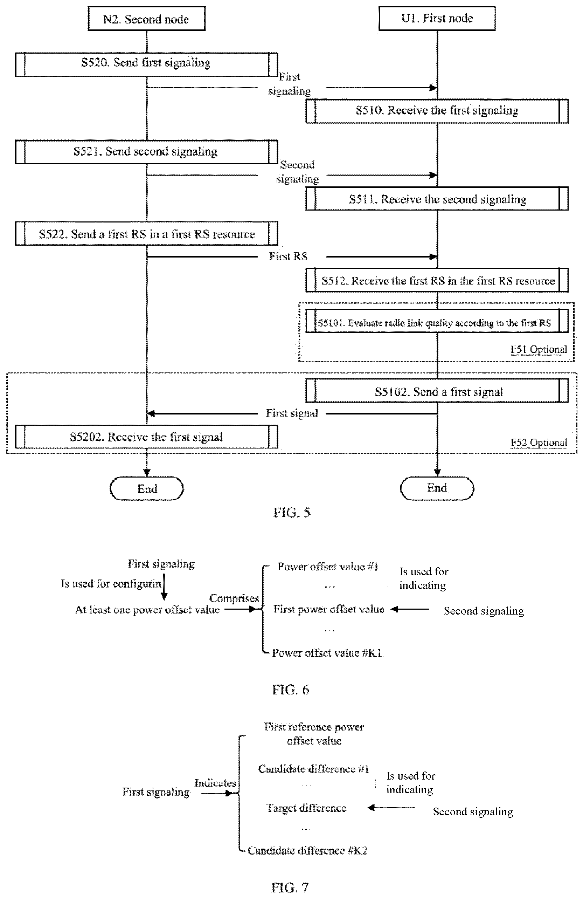

Embodiment 5 illustrates a first flowchart of transmission between a first node and a second node according to one embodiment of the present application. In FIG. 5, a first node U1 communicates with a second node N2 via a radio link. In FIG. 5, steps in blocks F51 and F52 are respectively optional. It should be particularly noted that the order in this embodiment does not limit the signal transmission order and implementation order in the present application.

For **the first node U1,** first signaling is received in step S510; second signaling is received in step S511; a first RS is received in a first RS resource in step S512; radio link quality is evaluated according to the first RS in step S5101; and a first signal is sent in step S5102.

For **the second node N2,** first signaling is sent in step S520; second signaling is sent in step S521; a first RS is sent in a first RS resource in step S522; and a first signal is received in step S5202.

In Embodiment 5, the first signaling is RRC signaling, and the first signaling is used for configuring at least one power offset value for a first RS resource; the second signaling is MAC layer signaling or physical layer signaling, and the second signaling is used for indicating a first power offset value for the first RS resource; the first power offset value simultaneously depends on the at least one power offset value and the second signaling; the ratio of EPRE of the first RS to EPRE of a broadcast signal is equal to the first power offset value; and the broadcast signal comprises a synchronization signal.

As one embodiment, the first node U1 is the first node in the present application.

As one embodiment, the second node N2 is the second node in the present application.

As one embodiment, an air interface between the second node N2 and the first node U1 comprises a wireless interface between a base station device and user equipment.

As one embodiment, the air interface between the second node N2 and the first node U1 comprises a wireless interface between a relay node device and user equipment.

As one embodiment, the air interface between the second node N2 and the first node U1 comprises a wireless interface between user equipment and user equipment.

As one embodiment, the second node N2 is a serving cell maintenance base station of the first node U1.

As one embodiment, the steps in block F51 in FIG. 5 exist; and the method applied to the first node U1 comprises: the first node U1 evaluates radio link quality according to the first RS, and the behavior of evaluating the radio link quality comprises scaling a received power of the first RS by the first power offset value.

As one embodiment, the steps in block F52 in FIG. 5 exist; and the method applied to the first node U1 comprises: the first node U1 sends a first signal, and the first signal is used by the second node N2 to determine the first RS resource.

As one sub-embodiment of the above embodiment, measurement of L1-RSRP (Layer 1 Reference Signal Received Power) corresponding to the first RS resource is greater than or equal to a first threshold.

As one embodiment, the first signaling is transmitted on a downlink physical layer data channel (i.e., a downlink channel that can be used for bearing physical layer data).

As one embodiment, a physical channel occupied by the first signaling comprises a PDSCH (Physical Downlink Shared Channel).

As one embodiment, the second signaling is transmitted on a downlink physical layer control channel (i.e., a downlink channel that can only be used to bear physical layer signaling).

As one embodiment, the physical layer channel occupied by the second signaling comprises a PDCCH (Physical Downlink Control Channel).

As one embodiment, the physical layer channel occupied by the second signaling comprises a PSCCH (Physical Sidelink Control Channel).

As one embodiment, the physical layer channel occupied by the second signaling comprises a PHICH (Physical HARQ Indicator Channel).

As one embodiment, the physical layer channel occupied by the second signaling comprises a PCFICH (Physical Control Format Indicator Channel).

As one embodiment, the first signal is transmitted on an uplink physical layer data channel (i.e., an uplink channel that can be used for bearing physical layer data).

As one embodiment, the physical layer channel occupied by the first signal comprises a PUSCH (Physical Uplink Shared Channel).

As one embodiment, the first signal is transmitted on an uplink physical layer control channel (i.e., a downlink channel that can only be used to bear physical layer signaling).

As one embodiment, the physical layer channel occupied by the first signal comprises a PUCCH (Physical Uplink Control Channel).

As one embodiment, the physical layer channel occupied by the first signal comprises a PRACH (Physical Random Access Channel).

### Embodiment 6

Embodiment 6 illustrates a schematic diagram of at least one power offset value comprising a plurality of power offset values according to one embodiment of the present application, as shown in FIG. 6. In FIG. 6, the at least one power offset value comprises a plurality of power offset values, the first power offset value is one of the plurality of power offset values, the first signaling is used for configuring the at least one power offset value, and the second signaling is used for indicating the first power offset value; and the plurality of power offset values are respectively a power offset value #1, ..., and a power offset value #K1, wherein K1 is a positive integer greater than 1.

As one embodiment, the first signaling is used for configuring the plurality of power offset values.

As one embodiment, the first signaling explicitly indicates the plurality of power offset values.

As one embodiment, the at least one power offset value is K1 power offset values, wherein K1 is a positive integer greater than 1, and the first power offset value is one of the K1 power offset values.

As one embodiment, the second signaling is used for indicating the first power offset value.

As one embodiment, the second signaling is used for indicating the first power offset value from the plurality of power offset values.

As one embodiment, the second signaling is used for determining the first power offset value from the plurality of power offset values.

As one embodiment, the second signaling explicitly indicates the first power offset value.

As one embodiment, the second signaling comprises a first field, the first field of the second signaling comprises at least one bit, and a value corresponding to the first field of the second signaling indicates the first power offset value.

### Embodiment 7

Embodiment 7 illustrates a schematic diagram of at least one power offset value comprising a plurality of power offset values according to another embodiment of the present application, as shown in FIG. 7. In FIG. 7, the first signaling indicates a first reference power offset value and at least K2 candidate differences, and the second signaling is used for indicating a target difference, wherein the target difference value is one of the at least one candidate difference, and the target difference and the first reference power offset value are jointly used for determining the first power offset value; and the at least one candidate difference is respectively a candidate difference #1, ..., and a candidate difference #K2, wherein K2 is a positive integer.

As one embodiment, the K2 candidate differences are respectively differences between the plurality of power offset values and the first reference power offset value.

As one embodiment, the first signaling indicates the first reference power offset value and a plurality of differences between the plurality of power offset values and the first reference power offset value.

As one sub-embodiment of this embodiment, the first signaling indicates the first reference power offset value, and the first signaling indicates K2 candidate differences, wherein the K2 candidate differences are respectively K2 differences between K2 candidate power offset values and the first reference power offset value, and the K2 candidate power offset values are the plurality of power offset values.

As one dependent embodiment of this sub-embodiment, the second signaling is used for indicating a target difference from the K2 candidate differences, wherein the target difference is one candidate difference corresponding to the first power offset value, and the target difference indicated by the second signaling and the first reference power offset value are jointly used for determining the first power offset value.

As one example of this dependent embodiment, the sum of the target difference indicated by the second signaling and the first reference power offset value is equal to the first power offset value.

As one example of this dependent embodiment, the difference between the first reference power offset value minus the target difference indicated by the second signaling is equal to the first power offset value.

As one dependent embodiment of this sub-embodiment, 0 is included in the K2 candidate differences.

As one dependent embodiment of this sub-embodiment, K2 is equal to K1 in the present application.

As one dependent embodiment of this sub-embodiment, K2 is a positive integer greater than 1.

As one embodiment, the K2 candidate differences are respectively differences between the other power offset values among the plurality of power offset values excluding the first reference power offset value and the first reference power offset value.

As one embodiment, the first signaling indicates the first reference power offset value and the differences between the other power offset values among the plurality of power offset values excluding the first reference power offset value and the first reference power offset value.

As one sub-embodiment of this embodiment, the first signaling indicates the first reference power offset value, and the first signaling indicates K2 candidate differences, wherein the K2 candidate differences are respectively K2 differences between K2 candidate power offset values and the first reference power offset value, and the K2 candidate power offset values and the first reference power offset value together form the plurality of power offset values.

As one dependent embodiment of this sub-embodiment, the second signaling is used for indicating the first power offset value from the plurality of power offset values.

As one example of this dependent embodiment, the second signaling is used for indicating the first reference power offset value, and the first reference power offset value is equal to the first power offset value.

As one dependent embodiment of this sub-embodiment, the second signaling is used for indicating a target difference from the K2 candidate differences, wherein the target difference is one candidate difference corresponding to the first power offset value, and the target difference indicated by the second signaling and the first reference power offset value are jointly used for determining the first power offset value.

As one example of this dependent embodiment, the sum of the target difference indicated by the second signaling and the first reference power offset value is equal to the first power offset value.

As one dependent embodiment of this sub-embodiment, 0 is not included in the K2 candidate differences.

As one dependent embodiment of this sub-embodiment, the sum of K2 and 1 is equal to K1 in the present application.

As one dependent embodiment of this sub-embodiment, K2 is equal to 1, and K1 in the present application is equal to 2.

As one dependent embodiment of this sub-embodiment, K2 is a positive integer greater than 1, and K1 in the present application is a positive integer greater than 2.

### Embodiment 8

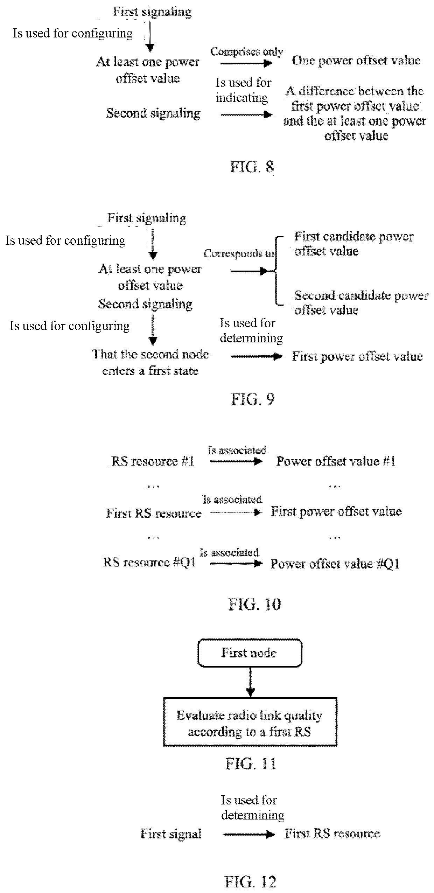

Embodiment 8 illustrates a schematic diagram of at least one power offset value comprising only one power offset value according to one embodiment of the present application, as shown in FIG. 8. In FIG. 8, the at least one power offset value comprises only one power offset value, the first signaling is used for configuring the at least one power offset value, and the second signaling is used for indicating a difference between the first power offset value and the at least one power offset value.

As one embodiment, the at least one power offset value comprises only one power offset value.

As one embodiment, the one power offset value is a target power offset value, and the first signaling is used for indicating the target power offset value.

As one sub-embodiment of this embodiment, the second signaling is used for determining a target difference, and the sum of the target power offset value and the target difference is equal to the first power offset value.

As one example of this dependent embodiment, the target difference is configured via RRC signaling.

As one dependent embodiment of this sub-embodiment, the second signaling is DCI, and a TPC field included in the DCI is used for indicating the target difference.

As one dependent embodiment of this sub-embodiment, the second signaling is DCI, and one field included in the DCI is used for indicating the target difference.

As one example of this dependent embodiment, a value of the one field included in the DCI is equal to the target difference.

As one example of this dependent embodiment, a code point of the one field included in the DCI is used for indicating the target difference.

As one dependent embodiment of this sub-embodiment, the second signaling is used for indicating that the second node enters a first state.

As one example of this dependent embodiment, the target difference is default.

As one example of this dependent embodiment, when the second node enters the first state, the target difference is adopted.

As one example of this dependent embodiment, when the second node enters the first state, the target difference is activated.

As one example of this dependent embodiment, when the second node enters the first state, the target difference is used for determining the first power offset value.

As one embodiment, the meaning that the target difference in the present application is default comprises: the target difference is pre-configured.

As one embodiment, the meaning that the target difference in the present application is default comprises: the target difference is pre-defined.

As one embodiment, the meaning that the target difference in the present application is default comprises: the target difference is fixed.

As one embodiment, the meaning that the target difference in the present application is default comprises: the target difference cannot be modified through MAC layer signaling or physical layer signaling.

As one embodiment, the meaning that the target difference in the present application is default comprises: the target difference needs to be activated to be adopted.

As one embodiment, the meaning that the target difference in the present application is default comprises: the value corresponding to the target difference does not depend on whether the second node enters the first state.

As one embodiment, the meaning that the target difference in the present application is default comprises: the value corresponding to the target difference does not depend on the target power offset value.

### Embodiment 9

Embodiment 9 illustrates a schematic diagram of at least one power offset value corresponding to a first candidate power offset value and a second candidate power offset value according to one embodiment of the present application, as shown in FIG. 9. In FIG. 9, a sender of the first signaling comprises a second node, the second signaling is used for determining that the second node enters a first state, the at least one power offset value corresponds to a first candidate power offset value and a second candidate power offset value, and the second node entering the first state is used for determining the first power offset value from the first candidate power offset value and the second candidate power offset value; and a characteristic of the first state comprises that the second node stops dynamic scheduling-based data transmission.

As one embodiment, the first signaling explicitly indicates the first candidate power offset value and the second candidate power offset value.

As one embodiment, when the second node enters the first state, the first power offset value is equal to the first candidate power offset value.

As one embodiment, when the second node does not enter the first state, the first power offset value is equal to the second candidate power offset value.

As one embodiment, the first candidate power offset value is different from the second candidate power offset value.

As one embodiment, the first candidate power offset value is greater than the second candidate power offset value.

As one embodiment, the first candidate power offset value is less than the second candidate power offset value.

As one embodiment, the first state is an inactive state.

As one embodiment, the first state comprises sending the inactive state.

As one embodiment, the first state comprises a DTX state.

As one embodiment, the first state comprises a network energy-saving state.

As one embodiment, a characteristic of the first state comprises that the second node sends SSB.

As one embodiment, a characteristic of the first state comprises that the second node sends CSI-RS.

As one embodiment, a characteristic of the first state comprises that the second node stops sending paging.

As one embodiment, a characteristic of the first state comprises that the second node stops sending part of the SIB (System Information Block).

As one embodiment, a characteristic of the first state comprises that the second node stops dynamic scheduling-based data transmission.

As one embodiment, the dynamic scheduling-based data transmission is UE-specific.

As one embodiment, the dynamic scheduling-based data transmission comprises: dynamic scheduling-based downlink transmission.

As one embodiment, the dynamic scheduling-based data transmission comprises: dynamic scheduling-based uplink reception.

As one embodiment, the dynamic scheduling-based data transmission comprises: dynamic scheduling-based downlink transmission and dynamic scheduling-based uplink reception.

As one embodiment, the meaning of "stop" is to turn off.

As one embodiment, the meaning of "stop" is to cease processing.

As one embodiment, the meaning of "stop" is to turn off the radio frequency.

As one embodiment, the meaning that the second node does not enter the first state is: the second node is not in a network energy-saving state.

As one embodiment, the meaning that the second node does not enter the first state is: the second node sends SIB.

As one embodiment, the meaning that the second node does not enter the first state is: the second node sends paging.

As one embodiment, the meaning that the second node does not enter the first state is: the second node performs dynamic scheduling-based data transmission.

As one embodiment, the meaning that the second signaling is used for determining that the second node enters a first state comprises: the second signaling explicitly indicates that the second node enters the first state.

As one embodiment, the meaning that the second signaling is used for determining that the second node enters a first state comprises: the second signaling is used by the first node in the present application to determine that the second node enters the first state.

As one embodiment, the meaning that the second signaling is used for determining that the second node enters a first state comprises: the first node in the present application determines, after receiving the second signaling, that the second node enters the first state.

As one embodiment, the meaning that the second signaling is used for determining that the second node enters a first state comprises: in response to receiving the second signaling, the first node in the present application determines that the second node enters the first state.

As one embodiment, the first signaling implicitly indicates the first candidate power offset value and the second candidate power offset value.

As one embodiment, the K2 candidate difference in the present application corresponds to a first candidate difference, and K2 is equal to 1. The first candidate power offset value corresponds to the sum of the first reference power offset value and the first candidate difference in the present application. The second candidate power offset value corresponds to the first reference power offset value in the present application, and K1 is equal to 2.

As one embodiment, the K2 differences in the present application correspond to a first candidate difference and a second candidate difference, and K2 is equal to 2. The first candidate power offset value corresponds to the sum of the first reference power offset value and the first candidate difference in the present application. The second candidate power offset value corresponds to the sum of the first candidate power offset value and the second candidate difference in the present application, and K1 is equal to 2.

As one sub-embodiment of this embodiment, the first candidate difference is different from the second candidate difference.

As one sub-embodiment of this embodiment, the first candidate difference is equal to 0, and the second candidate difference is not equal to 0.

### Embodiment 10

Embodiment 10 illustrates a schematic diagram of a relationship between a first RS resource and a first power offset value according to one embodiment of the present application, as shown in FIG. 10. In FIG. 10, the first RS resource is one of Q1 RS resources, and Q1 is a positive integer greater than 1; the Q1 RS resources are respectively associated with Q1 power offset values; the at least one power offset value corresponds to the Q1 power offset values; and the first power offset value is a power offset value associated with the first RS resource in the Q1 power offset values.

As one embodiment, the Q1 is equal to the K1 in the present application.

As one embodiment, the Q1 RS resources comprise at least one RS resource that is a CSI-RS resource.

As one embodiment, the Q1 RS resources are respectively Q1 CSI-RS resources.

As one embodiment, the Q1 RS resources comprise at least one RS resource that is a PTRS resource.

As one embodiment, the Q1 RS resources comprise at least one RS resource that is a DMRS resource.

As one embodiment, the Q1 RS resources comprise at least one RS resource that is a TRS resource.

As one embodiment, the second signaling is used for indicating the first RS resource from the Q1 RS resources.

As one embodiment, the first node determines the power offset value associated with the first RS resource from the Q1 power offset values according to an index of the first RS resource in the Q1 RS resources.

As one embodiment, the Q1 RS resources are configured for the first state of the second node.

As one embodiment, the Q1 RS resources are configured for a network energy-saving state of the second node.

As one embodiment, the Q1 RS resources are configured for a DTX state of the second node.

### Embodiment 11

Embodiment 11 illustrates a schematic diagram of a first node evaluating radio link quality according to a first RS according to one embodiment of the present application, as shown in FIG. 11. In FIG. 11, the first node evaluates the radio link quality according to the first RS; and the behavior of evaluating the radio link quality comprises scaling a received power of the first RS by the first power offset value.

As one embodiment, the radio link quality comprises RSRP (Reference Signal Received Power).

As one embodiment, the radio link quality is RSRP.

As one embodiment, the radio link quality comprises L1-RSRP.

As one embodiment, the radio link quality is L1-RSRP (Layer 1 RSRP).

As one embodiment, the radio link quality comprises RSRQ (Reference Signal Received Quality).

As one embodiment, the radio link quality is RSRQ.

As one embodiment, the radio link quality is SINR (Signal to Noise and Interference Ratio).

As one embodiment, the radio link quality is L1-SINR (Layer 1 SINR).

As one embodiment, the radio link quality is BLER (Block Error Rate).

As one embodiment, the radio link quality is a hypothetical BLER.

As one embodiment, the first threshold is Qin, LR.

As one embodiment, the unit of the first threshold is dBm.

As one embodiment, the unit of the first threshold is mW.

As one embodiment, the unit of the first threshold is dB.

As one embodiment, the first threshold is configured through a rsrp-ThresholdSSB field.

As one embodiment, the first threshold is configured through a rsrp-ThresholdBFR field.

As one embodiment, the first threshold is configured through BeamFailureRecoveryConfig IE.

As one embodiment, the meaning of the power scaling comprises: a value obtained by adding the first power offset value to the received power of the first RS is used for evaluating the radio link quality.

As one embodiment, the meaning of the power scaling comprises: a value obtained by subtracting the first power offset value from the received power of the first RS is used for evaluating the radio link quality.

As one embodiment, the evaluation of the radio link quality comprises judging whether the radio link quality is inferior to the first threshold.

As one embodiment, the evaluation of the radio link quality comprises comparing the scaled received power of the first RS with the first threshold.

As one embodiment, the evaluation of the radio link quality comprises comparing the scaled received power of the first RS with the first threshold; and when the scaled received power of the first RS is greater than or equal to the first threshold, the first node provides a configuration index of the first RS to a higher layer.

As one sub-embodiment of this embodiment, the behavior of providing the configuration index of the first RS to the higher layer is performed upon a request from the higher layer of the first node.

As one embodiment, the evaluation of the radio link quality is used for beam failure monitoring.

As one embodiment, the evaluation of the radio link quality is used for Beam Failure Recovery (BFR).

### Embodiment 12

FIG. 12 illustrates a schematic diagram of a first signal being used for determining a first RS resource according to one embodiment of the present application, as shown in FIG. 12.

As one embodiment, the measurement of L1-RSRP of the first RS resource is greater than or equal to the first threshold.

As one embodiment, the first signal is used for indicating the first RS resource.

As one embodiment, the first signal is used for indicating a configuration index of the first RS.

As one embodiment, the first signal is used for indicating an index of the first RS.

As one embodiment, the first signal is used for indicating an Id (Identity) of the first RS resource.

As one embodiment, the first signal has a corresponding relationship with the first RS resource.

As one embodiment, the first signal is used for indicating an SSB-Index corresponding to the first RS resource.

As one embodiment, the first signal is used for indicating an NZP-CSI-RS-ResourceId corresponding to the first RS resource.

As one embodiment, the first signal is used for indicating an Id corresponding to the first RS resource.

As one embodiment, the first signal is used for indicating an CSI-IM-ResourceId corresponding to the first RS resource.

As one embodiment, the first signal is used for indicating an CSI-SSB-ResourceId corresponding to the first RS resource.

As one embodiment, when the measurement of L1-RSRP of the first RS resource is greater than or equal to the first threshold, the first signal is sent.

As one embodiment, when the measurement of L1-RSRP of the first RS resource is inferior to the first threshold, the first signal is not sent.

As one embodiment, when the measurement of L1-RSRP of the first RS resource is greater than or equal to the first threshold, the first radio signal is triggered to be sent.

As one embodiment, the first signaling comprises an MAC CE.

As one embodiment, the first signaling comprises BFR MAC CEs.

As one embodiment, the first signal comprises at least one of a random access preamble, a BFR MAC CE, a Truncated BFR MAC CE, an Enhanced BFR MAC CE, or a Truncated Enhanced BFR MAC CE.

As one embodiment, the random access preamble is a contention-based Random Access Preamble (CBRA Preamble).

As one embodiment, the random access preamble is a contention-free Random Access Preamble (CFRA Preamble).

### Embodiment 13

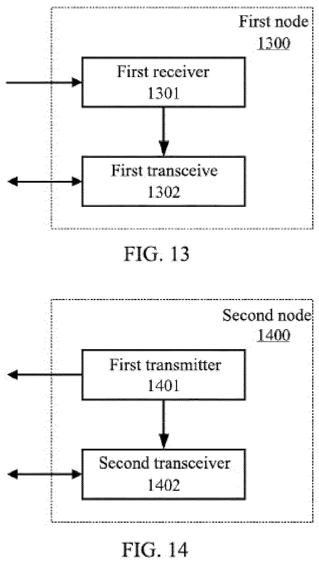

Embodiment 13 illustrates a structural block diagram of a processing unit in a first node according to one embodiment of the present application; as shown in FIG. 12. In FIG. 13, a processing unit 1300 in the first node comprises a first receiver 1301 and a first transceiver 1302.

In Embodiment 13, the first receiver 1301 receives first signaling and second signaling, wherein the first signaling is RRC signaling, and the first signaling is used by the first node to configure at least one power offset value for a first RS resource; the second signaling is MAC layer signaling or physical layer signaling, and the second signaling is used for indicating a first power offset value for the first RS resource; the first power offset value simultaneously depends on the at least one power offset value and the second signaling; the first transceiver 1302 receives a first signal in the first RS resource; the ratio of EPRE of the first RS to EPRE of a broadcast signal is equal to the first power offset value; and the broadcast signal comprises a synchronization signal.

As one embodiment, the at least one power offset value comprises a plurality of power offset values, and the first power offset value is one of the plurality of power offset values.

As one embodiment, the at least one power offset value comprises only one power offset value, and the second signaling is used for indicating a difference between the first power offset value and the at least one power offset value.

As one embodiment, the first transceiver 1302 evaluates radio link quality according to the first RS; and the behavior of evaluating the radio link quality comprises scaling a received power of the first RS by the first power offset value.

As one embodiment, a sender of the first signaling comprises a second node, the second signaling is used by the first node to determine that the second node enters a first state, the at least one power offset value corresponds to a first candidate power offset value and a second candidate power offset value, and the second node entering the first state is used by the first node to determine the first power offset value from the first candidate power offset value and the second candidate power offset value; and a characteristic of the first state comprises that the sender of the first signaling stops dynamic scheduling-based data transmission.

As one embodiment, the first RS resource is one of Q1 RS resources, and Q1 is a positive integer greater than 1; the Q1 RS resources are respectively associated with Q1 power offset values; the at least one power offset value corresponds to the Q1 power offset values; and the first power offset value is a power offset value associated with the first RS resource in the Q1 power offset values.

As one embodiment, the first transceiver 1302 sends a first signal; a recipient of the first signal comprises a second node, and the first signal is used by the second node to determine the first RS resource; and the measurement of L1-RSRP corresponding to the first RS resource is greater than or equal to the first threshold.

As one embodiment, the first signaling indicates a first reference power offset value and differences between the plurality of power offset values and the first reference power offset value.

As one embodiment, the first signaling indicates the first reference power offset value and the differences between the other power offset values among the plurality of power offset values excluding the first reference power offset value and the first reference power offset value.

As one sub-embodiment of this embodiment, the first signaling indicates the first reference power offset value, and the first signaling indicates K2 candidate differences, wherein the K2 candidate differences are respectively differences between K2 candidate power offset values and the first reference power offset value, and the K2 candidate power offset values are the plurality of power offset values.

As one dependent embodiment of this sub-embodiment, the second signaling is used for indicating a target difference from the K2 candidate differences, wherein the target difference is one candidate difference corresponding to the first power offset value, and the target difference indicated by the second signaling and the first reference power offset value are jointly used for determining the first power offset value.

As one embodiment, the first signaling indicates the first reference power offset value and the differences between the other power offset values among the plurality of power offset values excluding the first reference power offset value and the first reference power offset value.

As one sub-embodiment of this embodiment, the first signaling indicates the first reference power offset value, and the first signaling indicates K2 candidate differences, wherein the K2 candidate differences are respectively differences between K2 candidate power offset values and the first reference power offset value, and the K2 candidate power offset values and the first reference power offset value together form the plurality of power offset values.

As one dependent embodiment of this sub-embodiment, the second signaling is used for indicating the first power offset value from the plurality of power offset values.

As one embodiment, the first node is user equipment.

As one embodiment, the first node is a relay node device.

As one embodiment, the first receiver 1301 comprises at least one of {an antenna 452, a receiving device 454, a receiving processor 456, a multi-antenna receiving processor 458, a controller/processor 459, a memory 460, and a data source 467} in Embodiment 4.

As one embodiment, the first transceiver 1302 comprises at least one of {an antenna 452, a transmitting device 454, a receiving processor 456, a transmitting processor 468, a multi-antenna receiving processor 458, a multi-antenna transmitting processor 457, a controller/processor 459, a memory 460, and a data source 467} in Embodiment 4.

### Embodiment 14

Embodiment 14 illustrates a structural block diagram of a processing unit in a second node according to one embodiment of the present application, as shown in FIG. 14. In FIG. 14, a processing unit 1400 in the second node comprises a first transmitter 1401 and a second transceiver 1402.

In Embodiment 14, the first transmitter 1401 sends first signaling and second signaling; the first signaling is RRC signaling, and the first signaling is used for configuring at least one power offset value for a first RS resource; the second signaling is MAC layer signaling or physical layer signaling, and the second signaling is used for indicating a first power offset value for the first RS resource; the second transceiver 1402 sends a first RS in the first RS resource; the first power offset value simultaneously depends on the at least one power offset value and the second signaling; the ratio of EPRE of the first RS to EPRE of a broadcast signal is equal to the first power offset value; and the broadcast signal comprises a synchronization signal.

As one embodiment, the at least one power offset value comprises a plurality of power offset values, and the first power offset value is one of the plurality of power offset values.

As one embodiment, the at least one power offset value comprises only one power offset value, and the second signaling is used for indicating a difference between the first power offset value and the at least one power offset value.

As one embodiment, a recipient of the first RS comprises a first node, and the first node evaluates radio link quality according to the first RS; and the behavior of evaluating the radio link quality comprises scaling a received power of the first RS by the first power offset value.

As one embodiment, a recipient of the first signaling comprises the first node, the second signaling is used by the first node to determine that the second node enters a first state, the at least one power offset value corresponds to a first candidate power offset value and a second candidate power offset value, and the second node entering the first state is used by the first node to determine the first power offset value from the first candidate power offset value and the second candidate power offset value; and a characteristic of the first state comprises that the second node stops dynamic scheduling-based data transmission.

As one embodiment, the first RS resource is one of Q1 RS resources, and Q1 is a positive integer greater than 1; the Q1 RS resources are respectively associated with Q1 power offset values; the at least one power offset value corresponds to the Q1 power offset values; and the first power offset value is a power offset value associated with the first RS resource in the Q1 power offset values.

As one embodiment, the second transceiver 1402 receives a first signal; the first signal is used by the second node to determine the first RS resource; and measurement of L1-RSRP corresponding to the first RS resource is greater than or equal to a first threshold.

As one embodiment, the first signaling indicates a first reference power offset value and differences between the plurality of power offset values and the first reference power offset value.

As one embodiment, the first signaling indicates the first reference power offset value and the differences between the other power offset values among the plurality of power offset values excluding the first reference power offset value and the first reference power offset value.

As one sub-embodiment of this embodiment, the first signaling indicates the first reference power offset value, and the first signaling indicates K2 candidate differences, wherein the K2 candidate differences are respectively differences between K2 candidate power offset values and the first reference power offset value, and the K2 candidate power offset values are the plurality of power offset values.

As one dependent embodiment of this sub-embodiment, the second signaling is used for indicating a target difference from the K2 candidate differences, wherein the target difference is one candidate difference corresponding to the first power offset value, and the target difference indicated by the second signaling and the first reference power offset value are jointly used for determining the first power offset value.

As one embodiment, the first signaling indicates the first reference power offset value and the differences between the other power offset values among the plurality of power offset values excluding the first reference power offset value and the first reference power offset value.

As one sub-embodiment of this embodiment, the first signaling indicates the first reference power offset value, and the first signaling indicates K2 candidate differences, wherein the K2 candidate differences are respectively differences between K2 candidate power offset values and the first reference power offset value, and the K2 candidate power offset values and the first reference power offset value together form the plurality of power offset values.

As one dependent embodiment of this sub-embodiment, the second signaling is used for indicating the first power offset value from the plurality of power offset values.

As one embodiment, the second node is a base station device.

As one embodiment, the second node is user equipment.

As one embodiment, the second node is a relay node device.

As one embodiment, the first transmitter 1401 comprises at least one of {an antenna 420, a transmitting device 418, a transmitting processor 416, a multi-antenna transmitting processor 471, a controller/processor 475, and a memory 476} in Embodiment 4.

As one embodiment, the second transceiver 1402 comprises at least one of {an antenna 420, a receiving device 418, a transmitting processor 416, a receiving processor 470, a multi-antenna transmitting processor 471, a multi-antenna receiving processor 472, a controller/processor 475, and a memory 476} in Embodiment 4.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The user equipment, terminals and UE in the present application include but are not limited to drones, communication modules on drones, remote-controlled aircrafts, aircrafts, small aircrafts, mobile phones, tablet computers, notebooks, vehicle-mounted communication devices, transportation means, vehicles, RSUs, wireless sensors, Internet cards, Internet of Things terminals, RFID (Radio Frequency Identification) terminals, NB-IoT (Narrow Band Internet of Things) terminals, MTC (Machine Type Communication) terminals, eMTC (enhanced MTC) terminals, data cards, Internet cards, vehicle-mounted communication devices, low-cost mobile phones, low-cost tablet computers, and other wireless communication devices. The base stations or system devices in the present application include but are not limited to macrocell base stations, microcell base stations, small cell base stations, femtocells, relay base stations, eNBs (evolved Node B), gNBs, TRPs, GNSS (Global Navigation Satellite System), relay satellites, satellite base stations, aerial base stations, RSUs, drones, test devices, such as transceiving apparatus or signaling testers that simulate some functions of the base stations, and other wireless communication devices.

Those skilled in the art should understand that the present invention may be implemented in other specified forms without departing from its core or basic features. Therefore, the embodiments disclosed at present should be regarded as descriptive rather than restrictive in any case. The scope of the invention is determined by the appended claims rather than the previous description, and all changes within their equivalent meanings and areas are deemed to be included therein.

## Claims

1. A device used in a first node for wireless communication, comprising:
a first receiver, receiving first signaling and second signaling, wherein the first signaling is RRC signaling, and the first signaling is used for configuring at least one power offset value for a first RS resource; the second signaling is MAC layer signaling or physical layer signaling, and the second signaling is used for indicating a first power offset value for the first RS resource; and
a first transceiver, receiving a first RS in the first RS resource,
wherein the first power offset value simultaneously depends on the at least one power offset value and the second signaling; the ratio of EPRE of the first RS to EPRE of a broadcast signal is equal to the first power offset value; and the broadcast signal comprises a synchronization signal.

2. The device for a first node according to claim 1, wherein the at least one power offset value comprises a plurality of power offset values, and the first power offset value is one of the plurality of power offset values.

3. The device for a first node according to claim 1, wherein the at least one power offset value comprises only one power offset value, and the second signaling is used for indicating a difference between the first power offset value and the at least one power offset value.

4. The device for a first node according to any one of claims 1 to 3, comprising:
the first transceiver, evaluating radio link quality according to the first RS,
wherein the behavior of evaluating the radio link quality comprises scaling a received power of the first RS by the first power offset value.

5. The device for a first node according to any one of claims 1, 2 or 4, wherein a sender of the first signaling comprises a second node, the second signaling is used for determining that the second node enters a first state, the at least one power offset value corresponds to a first candidate power offset value and a second candidate power offset value, and the second node entering the first state is used for determining the first power offset value from the first candidate power offset value and the second candidate power offset value; and a characteristic of the first state comprises that the second node stops dynamic scheduling-based data transmission.

6. The device for a first node according to any one of claims 1, 2 or 4, wherein the first RS resource is one of Q1 RS resources, and Q1 is a positive integer greater than 1; the Q1 RS resources are respectively associated with Q1 power offset values; the at least one power offset value corresponds to the Q1 power offset values; and the first power offset value is a power offset value associated with the first RS resource in the Q1 power offset values.

7. The device for a first node according to any one of claims 1 to 6, comprising:
the first transceiver, sending a first signal,
wherein the first signal is used for determining the first RS resource; and measurement of L1-RSRP corresponding to the first RS resource is greater than or equal to a first threshold.

8. A device used in a second node for wireless communication, comprising:
a first transmitter, sending first signaling and second signaling, wherein the first signaling is RRC signaling, and the first signaling is used for configuring at least one power offset value for a first RS resource; the second signaling is MAC layer signaling or physical layer signaling, and the second signaling is used for indicating a first power offset value for the first RS resource; and
a second transceiver, sending a first RS in the first RS resource,
wherein the first power offset value simultaneously depends on the at least one power offset value and the second signaling; the ratio of EPRE of the first RS to EPRE of a broadcast signal is equal to the first power offset value; and the broadcast signal comprises a synchronization signal.

9. A method used in a first node for wireless communication, comprising:
receiving first signaling and second signaling, wherein the first signaling is RRC signaling, and the first signaling is used for configuring at least one power offset value for a first RS resource; the second signaling is MAC layer signaling or physical layer signaling, and the second signaling is used for indicating a first power offset value for the first RS resource; and
receiving a first RS in the first RS resource,
wherein the first power offset value simultaneously depends on the at least one power offset value and the second signaling; the ratio of EPRE of the first RS to EPRE of a broadcast signal is equal to the first power offset value; and the broadcast signal comprises a synchronization signal.

10. A method used in a second node for wireless communication, comprising:
sending first signaling and second signaling, wherein the first signaling is RRC signaling, and the first signaling is used for configuring at least one power offset value for a first RS resource; the second signaling is MAC layer signaling or physical layer signaling, and the second signaling is used for indicating a first power offset value for the first RS resource; and
sending a first RS in the first RS resource,
wherein the first power offset value simultaneously depends on the at least one power offset value and the second signaling; the ratio of EPRE of the first RS to EPRE of a broadcast signal is equal to the first power offset value; and the broadcast signal comprises a synchronization signal.
